(19) Europäisches Patentamt
European Patent Office
Office européen des brevets

(11) **EP 4 726 805 A1**

(12) **EUROPEAN PATENT APPLICATION**
published in accordance with Art. 153(4) EPC

(43) Date of publication:
**15.04.2026   Bulletin 2026/16**

(21) Application number: **24843455.7**

(22) Date of filing: **15.07.2024**

(51) International Patent Classification (IPC):
$H01M\ 4/36$ (2006.01)          $H01M\ 4/505$ (2010.01)
$H01M\ 4/525$ (2010.01)          $H01M\ 4/131$ (2010.01)
$H01M\ 10/052$ (2010.01)          $H01M\ 4/02$ (2006.01)

(52) Cooperative Patent Classification (CPC):
Y02E 60/10

(86) International application number:
**PCT/KR2024/010083**

(87) International publication number:
**WO 2025/018739 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023   KR 20230091824**

(71) Applicant: **LG Chem, Ltd.
Seoul 07336 (KR)**

(72) Inventors:
• **KO, Young Min**
  **Daejeon 34122 (KR)**
• **KIM, Dong Hwan**
  **Daejeon 34122 (KR)**
• **JUN, Tae Hwan**
  **Daejeon 34122 (KR)**
• **KIM, Jin Sol**
  **Daejeon 34122 (KR)**

(74) Representative: **Hoffmann Eitle
Patent- und Rechtsanwälte PartmbB
Arabellastraße 30
81925 München (DE)**

(54) **POSITIVE ACTIVE MATERIAL, AND POSITIVE ELECTRODE AND LITHIUM SECONDARY BATTERY COMPRISING SAME**

(57)    The present invention relates to a positive electrode material, and a positive electrode and a lithium secondary battery including the same. The positive electrode material includes a first positive electrode active material in the form of a single particle, and a second positive electrode active material having a greater average particle size ($D_{50}$) than the first positive electrode active material. The first positive electrode active material is a lithium-excess manganese oxide simultaneously including a $Li_2MnO_3$ phase and a $LiMO_2$ (where M is an element including at least one selected from Ni, Co and Mn) phase, and the second positive electrode active material is a lithium nickel oxide including 50 mol% or more and less than 80 mol% of nickel with respect to the total moles of metals except for lithium.

[FIG. 1]

**Description**

**Technical Field**

Cross-reference to Related Applications

This application claims the benefit of Korean Patent Application No. 10-2023-0091824 filed on July 14, 2023, in the Korean Intellectual Property Office, the disclosure of which is incorporated herein in its entirety by reference.

Technical Field

The present invention relates to a positive electrode material, and a positive electrode and a lithium secondary battery including the same, and particularly, to a positive electrode material including a lithium-excess manganese oxide and a mid-Ni lithium nickel oxide, and a positive electrode and a lithium secondary battery including the same.

**BACKGROUND ART**

A lithium secondary battery is composed of four components such as a positive electrode, a negative electrode, a separator, and an electrolyte. Among them, a positive electrode active material included in the positive electrode is a material that plays a major role in determining capacity, output and lifespan of a battery. In order for the lithium secondary battery to have high energy density, high output and longer lifespan, an improvement in performance of the positive electrode active material is essential, and thus recently, a significant amount of research on development of a high-performance positive electrode active material is being conducted.

Recently, as the scope of use for the lithium secondary battery has increased, development of a high-Ni NCM positive electrode material with an increased nickel content is being actively carried out to increase the energy density of the battery, especially to increase the capacity. However, the high-Ni NCM positive electrode material has a high fire risk problem due to structural instability according to a nickel content. Meanwhile, a mid-Ni NCM positive electrode material has the nickel content of about 60 mol% and thus is structurally stabler than the high-Ni NCM positive electrode material, but has a small energy density due to a small capacity according to a small nickel content.

Accordingly, development of the positive electrode material with a stable structure and an improved energy density is necessary.

**DISCLOSURE OF THE INVENTION**

**TECHNICAL PROBLEM**

An aspect of the present invention provides a positive electrode material with an improved energy density and thermal stability, and as a result, provides a battery, with an improved performance, including the same.

In addition, another aspect of the present invention provides a positive electrode and a lithium secondary battery including the positive electrode material.

**TECHNICAL SOLUTION**

In order to solve the above-described problem, an aspect of the present invention provides a positive electrode material, a positive electrode and a lithium secondary battery.

(1) The present invention provides a positive electrode material including a first positive electrode active material in the form of a single particle, and a second positive electrode active material having a greater average particle size ($D_{50}$) than the first positive electrode active material, wherein the first positive electrode active material is a lithium-excess manganese oxide simultaneously including a $Li_2MnO_3$ phase and a $LiMO_2$ (where M is an element including at least one selected from Ni, Co and Mn) phase, and the second positive electrode active material is a lithium nickel oxide including 50 mol% or more and less than 80 mol% of nickel with respect to the total moles of metals except for lithium.

(2) In (1) above, the first positive electrode active material has an average particle size ($D_{50}$) of 0.1 $\mu$m or more and less than 3.5 $\mu$m.

(3) In (1) or (2) above, the second positive electrode active material has an average particle size ($D_{50}$) of 3.5 $\mu$m to 10.0 $\mu$m.

(4) In any one among (1) to (3) above, the second positive electrode active material is in the form of a single particle or a secondary particle.

(5) In any one among (1) to (4) above, the first positive electrode active material has a composition represented by Formula 1 below.

[Formula 1]     $Li_{1+x1}Ni_{a1}Mn_{b1}M^1_{c1}O_{y1}$

In Equation 1 above,

M$^1$ is at least one selected from Co, Mo, W, V, Zr, Al, Nb, Ti, Y, Ta, Sn, and B,
$0.05 \leq x1 \leq 0.25$, $0 < a1 \leq 0.5$, $0.5 \leq b1 \leq 0.75$, $0 \leq c1 \leq 0.15$, and $0 \leq y1 \leq 2.0$, and

$$x1+a1+b1+c1=1.0.$$

(6) In any one among (1) to (5), the second positive electrode active material has a composition represented by Formula 2 below.

[Formula 2]     $Li_{1+x2}Ni_{a2}Co_{b2}Mn_{c2}M^2_{d2}O_2$

In Equation 2 above,

M$^2$ is at least one selected from Mo, W, V, Zr, Al, Nb, Ti, Y, Ta, Sn, and B,
$0.9 \leq 1+x2 \leq 1.1$, $0.50 \leq a2 < 0.80$, $0 < b2 < 0.50$, $0 < c2 < 0.50$, and $0 \leq d2 \leq 0.1$, and

$$a2+b2+c2+d2=1.0.$$

(7) In any one (1) to (6) above, a weight ratio of the first positive electrode active material and the second positive electrode active material is 1:0.5 to 4.
(8) In any one among (1) to (7) above, the positive electrode material has a pellet density of 2.7 g/cm$^2$ to 3.3 g/cm$^2$.
(9) The present invention provides a positive electrode including the positive electrode material according to any one in (1) to (8) above.
(10) The present invention provides a lithium secondary battery including the positive electrode according to (9) above.

## ADVANTAGEOUS EFFECTS

Since a positive electrode material according to the present invention simultaneously includes a large particle mid-Ni lithium nickel oxide and a small particle lithium-excess manganese oxide in the form of a single particle, an energy density and stability are excellent, and as a result, performances, for example, a capacity, the energy density, and the like, of a battery including the positive electrode material may be improved, and a positive electrode active material particle may be prevented from being broken during manufacturing or operating the battery.
The positive electrode material according to the present invention has a stable structure, and thus may be used as a positive electrode material for a high voltage of 4.4 V or higher.

## BRIEF DESCRIPTION OF THE DRAWINGS

FIG. 1 is a cross-sectional EPMA data of a positive electrode including a positive electrode material of Example 1.
FIG. 2 is a cross-sectional EPMA data of a positive electrode including a positive electrode material of Example 2.
FIG. 3 is an XRD data of positive electrode materials of Examples 1 to 6, and Comparative Examples 1 and 3.

## BEST MODE FOR CARRYING OUT THE INVENTION

Hereinafter, the present invention will be described in more detail in order to help to understand the present invention.
It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present disclosure, 'the form of a single particle' is a concept that contrasts with the form of a spherical secondary particle formed by agglomeration of tens to hundreds of primary particles, and refers to a form composed of 10 or fewer primary particles. Specifically, 'the form of the single particle' may be the form of a single particle composed of one primary particle, and may be the form of a secondary particle formed by agglomeration of several primary particles.

In the present disclosure, 'a primary particle' means a smallest particle unit recognized when a positive electrode active material is observed by using a scanning electron microscope (SEM), and 'a secondary particle' means a secondary structure formed by agglomeration of a plurality of primary particles.

In the present disclosure, an average particle size ($D_{50}$) may be defined as a particle size corresponding to 50% of a volume accumulation amount in a particle size distribution curve. For example, the average particle size ($D_{50}$) may be measured by using a laser diffraction method, and more specifically, positive electrode materials are dispersed in a dispersing medium, and are introduced into a commercially available laser diffraction particle size measuring device (e.g., Microtrac Bluewave) and irradiated with ultrasonic waves at an output of 40 W, and then the average particle size ($D_{50}$) corresponding to 50% of the particle size distribution in the measuring device may be calculated.

In the present disclosure, a pellet density is a value calculated using Equation 2 below when a force equivalent to 2,000 kgf is applied to form a pellet using an automatic pellet press. Specifically, the pellet density is a value obtained according to (1) to (3) below.

(1) Using a universal testing machine (UTM: Universal Testing Machine, Instron, Model 5966), a zero point for thickness is adjusted using a cylindrical mold for a circular pellet holder.

(2) A positive electrode active material is placed in the above circular pellet holder, and a thickness of the formed pellet is measured by applying a force until the force equivalent to 2,000 kgf is reached.

(3) A pellet volume is calculated with Equation 1 below, and the pellet density is calculated with Equation 2 below.

The pellet volume = $\pi$(a radius of the circular pellet holder)$^2$ x the thickness of the pellet [Equation 1]

The pellet density (g/cm$^3$) = a weight of the positive electrode active material (g) / the pellet volume (cm$^3$) [Equation 2]

**Positive electrode material**

The positive electrode material according to the present invention includes a first positive electrode active material, and a second positive electrode active material having a greater average particle size ($D_{50}$) than the first positive electrode active material. In this case, the first positive electrode active material is a lithium-excess manganese oxide simultaneously including a $Li_2MnO_3$ phase and a $LiMO_2$ (where M is an element including at least one selected from Ni, Co and Mn), and the second positive electrode active material a lithium nickel oxide including 50 mol% or more and less than 80 mol% of nickel with respect to the total moles of metals except for lithium.

The inventors according to the present invention discovered that when the positive electrode material simultaneously including a large particle mid-Ni lithium nickel oxide and a small particle lithium-excess manganese oxide in the form of a single particle is applied to a positive electrode for a secondary battery, an electrode density may be improved, particle breaking may be minimized, a capacity and an energy density of the battery may be improved, gas generation may be suppressed by preventing the positive electrode active material particle from being broken during manufacturing or operating the battery, and the positive electrode material may be used as a positive electrode material for a high voltage of 4.4 V or higher, and completed the present invention.

Meanwhile, as mentioned in the background art of the present invention, increases in the capacity and the energy density are greatly required with recent increase in a scope of use of the lithium secondary battery, but since when only the second positive electrode active material is used as the positive electrode material, the nickel content is not high, the capacity and the energy density are insufficient. Meanwhile, when the nickel content in the lithium nickel oxide is at least 80 mol%, a discharge capacity increases, but thermal stability decreases.

Since the positive electrode material includes the first positive electrode active material in the form of a single particle, and the second positive electrode active material having a greater average particle size ($D_{50}$) than the first positive electrode active material, the first positive electrode active material fills a space between the second positive electrode active materials, and thus the pellet density is high and a stress applied to the second positive electrode active material is dispersed so that particle breaking may be prevented in rolling for manufacturing an electrode.

The first positive electrode active material may be prepared through a process of dry mixing and firing a lithium raw material and transition metal raw materials. However, an embodiment of the present invention is not limited thereto.

The second positive electrode active material may be obtained in the same method as the prior method by preparing a precursor through coprecipitation, and then mixing and firing the precursor with the lithium raw material, but an embodiment of the present invention is not limited thereto. Meanwhile, as described later, the second positive electrode active material may be in the form of a secondary particle or single particle, but the second positive electrode active material in the form of the single particle may have a higher firing temperature than the second positive electrode active material in the form of the secondary particle. Additionally, the second positive electrode active material may be prepared, similarly to the first positive electrode active material, through the process of dry mixing and firing the lithium raw material and the transition metal raw materials.

According to the present invention, the first positive electrode active material may have an average particle size ($D_{50}$) of 0.1 $\mu$m or more and less than 3.5 $\mu$m. Specifically, the first positive electrode active material may have the average particle size ($D_{50}$) of 0.1 $\mu$m or more, 0.2 $\mu$m or more, 0.3 $\mu$m or more, 0.4 $\mu$m or more, 0.5 $\mu$m or more, 0.6 $\mu$m or more, 0.7 $\mu$m or more, 0.8 $\mu$m or more, or 0.9 $\mu$m or more, and 2.0 $\mu$m or less, 2.5 $\mu$m or less, 3.0 $\mu$m or less, or less than 3.5 $\mu$m. In this case, there are advantages in a capacity and long-term lifespan of the positive electrode material.

According to the present invention, the second positive electrode active material may have an average particle size ($D_{50}$) of 3.5 $\mu$m or more and less than 10.0 $\mu$m. Specifically, the second positive electrode active material may have the average particle size ($D_{50}$) of 3.5 $\mu$m or more, or 4.0 $\mu$m or more, and 5.0 $\mu$m or less, 6.0 $\mu$m or less, 7.0 $\mu$m or less, 8.0 $\mu$m or less, 9.0 $\mu$m or less, or 10.0 $\mu$m or less.

When the average particle sizes ($D_{50}$) of the first positive electrode active material and the second positive electrode active material are in the ranges, the second positive electrode active material may be appropriately distributed between the first positive electrode active material to have an excellent filling ratio.

According to the present invention, the second positive electrode active material may be in the form of a single particle or secondary particle. When the second positive electrode active material is in the form of the single particle, there are advantages of less particle breaking and a higher pellet density, and when the second positive electrode active material is in the form of the secondary particle, there is an advantage of more improved capacity expression.

According to the present invention, the first positive electrode active material may have a composition represented by Formula 1 below in order to improve charge/discharge efficiency, initial charge/discharge efficiency (especially, the charge/discharge efficiency at 0.1 C), and discharge capacity in an activation process of the battery.

$$[\text{Formula 1}] \qquad Li_{1+x1}Ni_{a1}Mn_{b1}M^1_{c1}O_{y1}$$

In Formula 1 above,

$M^1$ is at least one selected from Co, Mo, W, V, Zr, Al, Nb, Ti, Y, Ta, Sn and B, and is specifically at least one selected from Mo, W, V, Zr, Al, Nb, Ti, Y, Ta, Sn and B,

$0.05 \leq x1 \leq 0.25$, $0 < a1 \leq 0.5$, $0.5 \leq b1 \leq 0.75$, $0 \leq c1 \leq 0.15$, and $0 \leq y1 \leq 2.0$, and

$$x1+a1+b1+c1=1.0.$$

Meanwhile, the first positive electrode active material may not include cobalt which is expensive, and may improve performances of the lithium secondary battery without including cobalt.

x1 may be specifically 0.05 or more, 0.06 or more, 0.07 or more, 0.08 or more, 0.09 or more, 0.10 or more, 0.11 or more, 0.12 or more, 0.13 or more, or 0.14 or more, and 0.15 or less, 0.20 or less, or 0.25 or less.

a1 may be specifically more than 0, 0.10 or more, 0.15 or more, or 0.20 or more, and 0.30 or less, 0.40 or less, or 0.50 or less.

b1 may be specifically 0.50 or more, 0.51 or more, 0.52 or more, 0.53 or more, 0.54 or more, or 0.55 or more, and 0.60 or less, 0.65 or less, 0.70 or less, or 0.75 or less.

c1 may be specifically 0 or more, and 0.05 or less, 0.10 or less, or 0.15 or less.

y1 may be specifically 0 or more, 0.5 or more, 1.0 or more, or 1.5 or more, and 2.0 or less, and more specifically, 2.0.

According to the present invention, the second positive electrode active material may have a composition represented by Formula 2 below in order to perform the positive electrode material having a stable structure and a higher battery capacity.

$$[\text{Formula 2}] \qquad Li_{1+x2}Ni_{a2}Co_{b2}Mn_{c2}M^2_{d2}O_2$$

In Formula 2 above,

$M^2$ is at least one selected from Mo, W, V, Zr, Al, Nb, Ti, Y, Ta, Sn and B,
$0.9 \leq 1+x2 \leq 1.1$, $0.50 \leq a2 < 0.80$, $0 < b2 < 0.50$, $0 < c2 < 0.50$, and $0 \leq d2 \leq 0.1$, and

```
a2+b2+c2+d2=1.0.
```

1+x2 may be specifically 0.9 or more, or 0.95 or more, and 1.05 or less, or 1.10 or less, and more specifically, 0.

a2 means an atomic fraction of nickel of metal elements except for lithium in the second positive electrode active material, and may be 0.50 or more, 0.55 or more or 0.60 or more, and 0.70 or less, 0.75 or less, or less than 0.80.

b2 means an atomic fraction of cobalt of the metal elements except for lithium in the second positive electrode active material, and may be more than 0, or 0.05 or more, and 0.20 or less, 0.30 or less, 0.40 or less, or less than 0.50.

c2 means an atomic fraction of manganese of the metal elements except for lithium in the second positive electrode active material, and may be more than 0, 0.05 or more, 0.10 or more, or 0.15 or more, and 0.35 or less, 0.40 or less, 0.45 or less, or less than 0.50.

d2 means an atomic fraction of element $M^2$ of the metal elements except for lithium in the second positive electrode active material, and may be or more or 0 or more, and 0.05 or less, or 0.10 or less.

The weight ratio of the first positive electrode active material and the second positive electrode active material may be 1:0.5 to 4. Specifically, the weight ratio of the first positive electrode active material and the second positive electrode active material may be 1:0.5 to 4, 1:0.7 to 4, 1:0.7 to 3, or 1:0.7 to 2.5. When the weight ratio of the first positive electrode active material and the second positive electrode active material is in the range, a filling density of the particles may be increased, and as a result, when the weight ratio is applied to the battery, the capacity and the energy density of the battery may be increased.

According to the present invention, the positive electrode material may have a pellet density of 2.7 g/cm$^2$ to 3.3 g/cm$^2$. Specifically, the positive electrode material may have a pellet density of 2.7g/cm$^2$ or more, 2.8g/cm$^2$ or more, or 2.9g/cm$^2$ or more, and 3.2g/cm$^2$ or less, or 3.3g/cm$^2$ or less. When the pellet density of the positive electrode material is in the range, the capacity and the energy density may be improved, and positive electrode active material particle breaking may be prevented during manufacturing or operating the battery.

## Positive electrode

The present invention provides a positive electrode including the positive electrode material.

The positive electrode may include a positive electrode current collector, a positive electrode active material layer formed on the positive electrode current collector, and the positive electrode active material layer may include the positive electrode.

The positive electrode current collector may include metal having high conductivity, and is not specially limited as long as being easily adhered to the positive electrode active material layer, and having no reactivity in a voltage range of the battery. For example, stainless steel, aluminum, nickel, titanium, or fired carbon, or aluminum or stainless steel surface-treated with carbon, nickel, titanium, silver, or the like may be used as the positive electrode current collector. In addition, the positive electrode current collector may have a thickness of 3 μm to 500 μm, and an adhesive force of the positive electrode material may be increased by forming a fine irregularity on the positive electrode current collector surface. For example, the positive electrode current collector may be used in various forms such as a film, a sheet, a foil, a net, a porous body, a foam, a non-woven body, etc.

The positive electrode active material layer may selectively include a conductive material and a binder as needed, together with the positive electrode material. In this case, the positive electrode material may be included in a content of 80 wt% to 99 wt%, and more specifically, 85 wt% to 98.5 wt% with respect to the total weight of the positive electrode active material layer, and may exhibit excellent capacity characteristics in the range.

The conductive material is used so as to impart conductivity to the electrode, and may be used without special limitation as long as having electronic conductivity without causing a chemical change in the battery to be constituted. Specific examples of the conductive material may be graphite such as natural graphite or artificial graphite, a carbon-based material such as carbon black, acetylene black, Ketjen black, channel black, furnace black, lamp black, thermal black, or a carbon fiber, a powder or fiber of metal such as copper, nickel, aluminum, or silver, a conductive tube such as a carbon nanotube, a conductive whisker such as zinc oxide or potassium titanate, a conductive metal oxide such as titanium oxide, and a conductive polymer such as a polyphenylene derivatives, and one alone or a mixture of at least two thereamong may be used. The conductive material may be included in a content of 0.1 wt% to 15 wt% with respect to the total weight of the positive electrode active material layer.

The binder may serve to improve attachment between the positive electrode active material particles and an adhesive force between the positive electrode active material and the current collector. Specific examples of the binder are polyvinylidene fluoride (PVDF), polyvinylidene fluoride-hexafluoropropylene copolymer (PVDF-co-HFP), polyvinylalcohol, polyacrylonitrile, polymethylmethacrylate, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluorine rubber, polyacrylic acid, a polymer in which hydrogens thereof are substituted with Li, Na, or Ca, various copolymers thereof, and the like, and one alone or a mixture of at least two thereamong may be used. The binder may be included in a content of 0.1 wt% to 15 wt% with respect to the total weight of the positive electrode active material layer.

The positive electrode may be manufactured in a typical method for manufacturing a positive electrode except for using the positive electrode material. Specifically, the positive electrode may be manufactured by applying, drying and rolling a composition (a positive electrode slurry) for forming the positive electrode active material layer prepared by dissolving or dispersing the positive electrode material and optionally the binder, the conductive material and a dispersant in a solvent, or may be manufactured by casting the composition for forming the positive electrode active material layer on a separate supporter, and laminating a film obtained by peeling from the supporter on the positive electrode current collector.

The solvent may be a solvent generally used in the corresponding art field, and may be dimethyl sulfoxide (DMSO), isopropyl alcohol, N-methylpyrrolidone (NMP), dimethylformamide (DMF), acetone and water, and one alone or a mixture of at least two thereamong may be used. An amount of the solvent used is sufficient as long as dissolving or dispersing the positive electrode material, the conductive material, the binder, and the dispersant in consideration of a coating thickness and a manufacturing yield of the slurry, and having a viscosity that may exhibit an excellent thickness uniformity when applied for manufacturing the positive electrode later.

## Lithium secondary battery

The present invention provides a lithium secondary battery including the positive electrode.

The lithium secondary battery may include the positive electrode, a negative electrode, and a separator and an electrolyte interposed between the positive electrode and the negative electrode. In addition, the lithium secondary battery may selectively further include a battery container that accommodates the positive electrode, the negative electrode and the separator, and a sealing body that seals the battery container.

The negative electrode may include a negative electrode current collector, and a negative electrode active material layer located on the negative electrode current collector.

The negative electrode current collector is not specially limited as long as having high conductivity without causing a chemical change in the battery, and copper, stainless steel, aluminum, nickel, titanium, or fired carbon, or copper or stainless steel surface-treated with carbon, nickel, titanium, silver, or the like may be used as the negative electrode current collector. In addition, the negative electrode current collector may typically have a thickness of 3 $\mu$m to 500 $\mu$m, and an adhesive force of a negative electrode material may be increased by forming a fine irregularity on the current collector surface. For example, the negative electrode current collector may be used in various forms such as a film, a sheet, a foil, a net, a porous body, a foam, a non-woven body, etc.

The negative electrode active material layer may selectively include a binder and a conductive material together with the negative electrode active material.

A compound enabling reversible intercalation and deintercalation of lithium may be used as the negative electrode active material. A specific example of the negative electrode active material may be a carbon material such as artificial graphite, natural graphite, graphitized carbon fiber, and amorphous carbon, a metallic compound capable of alloying with lithium, such as Si, Al, Sn, Pb, Zn, Bi, In, Mg, Ga, Cd, Si alloy, Sn alloy, or Al alloy, a metallic oxide capable of being doped and dedoped with lithium, such as $SiO_\beta(0<\beta<2)$, $SnO_2$, vanadium oxide, and lithium vanadium oxide, a composite including the metallic compound and the carbon material, such as a Si-C composite or Sn-C composite, or the like. In addition, a metal lithium thin-film may be used as the negative electrode active material. In addition, both of low-crystallinity carbon and high-crystallinity carbon may be used as the carbon material. Soft carbon and hard carbon are the representative low-crystallinity carbon, and high-temperature fired carbons such as natural graphite or artificial graphite having an amorphous, plate-like, flaky, spherical or fibrous form, Kish graphite, pyrolytic carbon, a mesophase pitch based carbon fiber, a meso-carbon microbead, a mesophase pitch and petroleum or coal tar pitch derived cokes are the representative high-crystallinity carbon. The negative electrode active material may be included in a content of 80 wt% to 99 wt% with respect to the total weight of the negative electrode active material layer.

The binder of the negative electrode active material is a component that helps bonding between the conductive material, the active material and the current collector, and is added in a content of 0.1 wt% to 10 wt% with respect to the total weight of the negative electrode active material layer. Examples of the binder may be polyvinylidenefluoride (PVDF), polyvinylalcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene-butadiene rubber, nitrile-butadiene rubber, fluororubber, various copolymers thereof, and the like.

The conductive material of the negative electrode active material layer is a component for further improving conductivity of the negative electrode active material, and is added in a content of 10 wt% or less, or preferably 5 wt% or less with respect to the total weight of the negative electrode active material layer. The conductive material is not specially limited as long as having conductivity without causing a chemical change in the battery, and graphite such as natural graphite or artificial graphite, carbon black such as acetylene black, Ketjen black, channel black, furnace black, lamp black, or thermal black, a conductive fiber such as a carbon fiber or metal fiber, fluorinated carbon, a metal powder such as an aluminum powder or nickel powder, a conductive whisker such as zinc oxide and potassium titanate, a conductive metal oxide such as titanium oxide, a conductive material such as a polyphenylene derivative, and the like may be used as the conductive material.

The negative electrode may be manufactured by applying, on the negative electrode current collector, and drying a composition (a negative electrode slurry) for forming the negative electrode active material layer prepared by dissolving or dispersing the negative electrode material and optionally the binder and the conductive material in a solvent, or may be manufactured by casting the composition for forming the negative electrode active material layer on a separate supporter, and laminating a film obtained by peeling from the supporter on the negative electrode current collector.

The separator separates the positive electrode and the negative electrode and provides a moving path of lithium ions, and may be used without special limitation as long as being used as a separator in a typical lithium secondary battery. In particular, the separator having a low resistance to ion movement in the electrolyte and excellent electrolyte solution moisture retention capacity is preferable. Specifically, a porous polymer film, for example, a porous polymer film made of a polyolefin polymer such as an ethylene homopolymer, a propylene homopolymer, an ethylene/butene copolymer, an ethylene/hexene copolymer, and an ethylene/methacrylate copolymer, or a stack structure of two or more layers thereof may be used. In addition, a typical porous nonwoven fabric, such as a nonwoven fabric made of a high-melting-point glass fiber, or a polyethylene terephthalate fiber may be used. In addition, a coated separator in which a ceramic component or a polymer material is included so as to secure a mechanical strength may be used, and may be selectively used as a single- or multi-layered structure.

The electrolyte may be an organic liquid electrolyte, an inorganic liquid electrolyte, a solid polymer electrolyte, a gel-type polymer electrolyte, a solid inorganic electrolyte, a molten inorganic electrolyte, and the like capable of being used in manufacturing the lithium secondary battery, but an embodiment of the present invention is not limited thereto. Specifically, the electrolyte may include an organic solvent and a lithium salt.

The organic solvent may be used without special limitation as long as serving as a medium in which ions related to an electrochemical reaction of the battery may move. Specifically, an ester solvent such as methyl acetate, ethyl acetate, $\gamma$-butyrolactone, and $\varepsilon$-caprolactone, an ether solvent such as dibutyl ether or tetrahydrofuran, a ketone solvent such as cyclohexanone, an aromatic hydrocarbon solvent such as benzene and fluorobenzene, a carbonate solvent such as dimethylcarbonate (DMC), diethylcarbonate (DEC), methylethylcarbonate (MEC), ethylmethylcarbonate (EMC), ethylenecarbonate (EC), and propylene carbonate (PC), an alcohol solvent such as ethylalcohol and isopropyl alcohol, a nitrile solvent such as R-CN (R is a linear, branched, or cyclic hydrocarbon group having 2 to 20 carbon atoms and may include a double-bonded aromatic ring or an ether bond), an amide solvent such as dimethylformamide, a dioxolane solvent such as 1,3-dioxolane, a sulfolane solvent and the like may be used as the organic solvent. Among them, the carbonate solvent is preferable, and a mixture of a cyclic carbonate (for example, ethylenecarbonate, propylenecarbonate or the like) having a high ionic conductivity and a high dielectric constant so as to increase a charge/discharge performance of the battery and a linear carbonate compound (for example, ethylmethylcarbonate, dimethylcarbonate, or the like) having a low viscosity is more preferable.

The lithium salt may be used without special limitation as long as being a compound capable of supplying lithium ions used in the lithium secondary battery. Specifically, at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be negative ions of the lithium salt, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$ or the like may be used as the lithium salt. It is preferable that the lithium salt is used in a concentration range of 0.1 m to 2.0 M. When the lithium salt has a concentration in the range, the electrolyte may have appropriate conductivity and viscosity to exhibit an excellent electrolyte performance and to effectively move the lithium ions.

The electrolyte may further include not only the electrolyte components but also at least one additive of a haloalkylenecarbonate compound such as difluoro ethylenecarbonate, pyridine, triethylphosphite, triethanolamine, cyclic ether, ethylene diamine, n-glyme, hexaphosphoric acid triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, aluminum trichloride, or the like for the purpose of improving lifespan characteristics of the battery and discharging capacity of the battery, and suppressing capacity decrease of the battery. The additive may be included in a content of 0.1 wt% to 5 wt% with respect to the total weight of the electrolyte.

The lithium secondary battery including the positive electrode material according to the present invention stably exhibits excellent capacity characteristics, output characteristics and lifespan characteristics to be useful in a portable device such as a mobile phone, a laptop computer, and a digital camera, and an electric vehicle such as a hybrid electric vehicle (HEV) and an electric vehicle (EV).

The lithium secondary battery according to the present invention may have an external shape without special limitation, and may have a cylindrical shape using a can, a square shape, a pouch shape, a coin shape, or the like.

The lithium secondary battery according to the present invention may be used not only as a battery cell used as a power source for a small device, but may also be preferably used as a unit battery in a medium- to large-sized battery module including a plurality of battery cells.

Accordingly, the battery module including the lithium secondary battery as the unit cell and a battery pack including the same is provided.

The battery module or the battery pack may be used as a medium- to large-sized device power source of at least any one of a power tool, an electric vehicle such as an electric vehicle (EV), a hybrid electric vehicle, and a plug-in hybrid electric vehicle (PHEV), or a power storage system.

## MODE FOR CARRYING OUT THE INVENTION

Hereinafter, embodiments of the present invention will be described in detail so that a person having ordinary skill in the art may easily perform the invention. However, the present invention may be performed in various different forms, and is not limited to the embodiments described here.

### Preparation Example

### Preparation Example 1

$Li_2CO_3$, $NiCO_3$, and $MnCO_3$ were dry mixed in an amount such that a molar ratio of lithium:nickel:manganese (Li:Ni:Mn) was 1.143:0.287:0.57, and pulverized using High Energy Ball Milling apparatus (Zoz) at 1600 rpm for 30 minutes, and then fired at 1000°C for 9 hours under an air atmosphere to manufacture a fired product. The fired product was pulverized under a condition of 3.5 bar using a jet mill apparatus, thereby preparing a lithium-excess manganese oxide (A1), in the form of a single particle, having a composition represented by $Li_{1.143}Ni_{0.287}Mn_{0.57}O_2$ and an average particle size ($D_{50}$) of 0.93 $\mu$m.

### Preparation Example 2

$Ni_{0.65}Co_{0.15}Mn_{0.2}(OH)_2$ and $Li_2CO_3$ were dry mixed in an amount such that a molar ratio of (Ni+Co+Mn):Li was 1:1.05, and fired at 835°C for 8 hours under an air atmosphere to prepare a lithium nickel oxide (B1), in the form of a secondary particle, having a composition represented by $LiNi_{0.65}Co_{0.15}Mn_{0.2}O_2$ and an average particle size ($D_{50}$) of 4.13 $\mu$m.

### Preparation Example 3

$Ni_{0.6}Co_{0.1}Mn_{0.3}(OH)_2$ and $Li_2CO_3$ were dry mixed in an amount such that a molar ratio of (Ni+Co+Mn):Li was 1:1.05, and primarily fired at 940°C for 6 hours under an air atmosphere and secondarily fired at 810°C for 9 hours to prepare a lithium nickel oxide (B2), in the form of a single particle, having a composition represented by $LiNi_{0.6}Co_{0.1}Mn_{0.3}O_2$ and an average particle size ($D_{50}$) of 4.40 $\mu$m.

### Preparation Example 4

$Li_2CO_3$, $Ni(OH)_2$, and $MnCO_3$ were mixed in pure water in an amount such that a molar ratio of lithium:nickel:manganese (Li:Ni:Mn) was 1.15:0.30:0.55 (a solid content: 20 wt%), and wet mixing was performed in a ball mill using zirconia balls for 1 hour. Thereafter, the zirconia balls were removed, and the solids were pulverized using a wet grinding apparatus (NETZCH, MiniCer) to prepare a slurry having an average particle size ($D_{50}$) of 0.2 $\mu$m. Thereafter, the slurry was spray-dried using a spray drying apparatus (Buchi, B-290) at an inlet hot air temperature of 200°C and an exhaust hot air temperature of 90°C or higher to obtain a dried product. The dried product was fired at 1000°C for 12 hours under an air atmosphere to prepare a fired product. The fired product was pulverized using a jet-mill apparatus (Isaac E&C, Micron-master air jetmill, 3.5 bar) to prepare a lithium-excess manganese oxide (A2), in the form of a single particle, having a composition represented by $Li_{1.15}Ni_{0.30}Mn_{0.55}O_2$ and an average particle size ($D_{50}$) of 1.24 $\mu$m.

### Examples and Comparative Examples

**Example 1**

A positive electrode material was prepared by mixing, at a weight ratio of 4:6, the lithium-excess manganese oxide (A1) in the form of a single particle prepared in Preparation Example 1 and the lithium nickel oxide (B1) in the form of a secondary particle prepared in Preparation Example 2.

**Example 2**

A positive electrode material was prepared by mixing, at a weight ratio of 4:6, the lithium-excess manganese oxide (A1) in the form of a single particle prepared in Preparation Example 1 and the lithium nickel oxide (B2) in the form of a single particle prepared in Preparation Example 3.

**Example 3**

A positive electrode material was prepared by mixing, at a weight ratio of 1:0.7, the lithium-excess manganese oxide (A2) in the form of a single particle prepared in Preparation Example 4 and the lithium nickel oxide (B1) in the form of a secondary particle prepared in Preparation Example 2.

**Example 4**

A positive electrode material was prepared by mixing, at a weight ratio of 1:1, the lithium-excess manganese oxide (A2) in the form of a single particle prepared in Preparation Example 4 and the lithium nickel oxide (B1) in the form of a secondary particle prepared in Preparation Example 2.

**Example 5**

A positive electrode material was prepared by mixing, at a weight ratio of 1:1.5, the lithium-excess manganese oxide (A2) in the form of a single particle prepared in Preparation Example 4 and the lithium nickel oxide (B1) in the form of a secondary particle prepared in Preparation Example 2.

**Example 6**

A positive electrode material was prepared by mixing, at a weight ratio of 1:2.3, the lithium-excess manganese oxide (A2) in the form of a single particle prepared in Preparation Example 4 and the lithium nickel oxide (B1) in the form of a secondary particle prepared in Preparation Example 2.

**Comparative Example 1**

The lithium nickel oxide (B1) in the form of a secondary particle was used as a positive electrode active material of Comparative Example 1.

**Comparative Example 2**

The lithium nickel oxide (B2) in the form of a single particle was used as a positive electrode active material of Comparative Example 2.

**Comparative Example 3**

The lithium-excess manganese oxide (A1) in the form of a single particle was used as a positive electrode active material of Comparative Example 3.

**Comparative Example 4**

The lithium-excess manganese oxide (A2) in the form of a single particle was used as a positive electrode active material of Comparative Example 4.

**Experimental Example**

**Experimental Example 1**

**(EPMA)**

A positive electrode material or positive electrode active material, Super P as a conductive material, and polyvinylidene fluoride (PVDF) as a binder of each of Examples and Comparative Examples above were mixed in a weight ratio of 92.5:3:4.5 in an N-methylpyrrolidone (NMP) solvent to prepare a positive electrode slurry. The prepared positive electrode slurry was applied to one surface of an aluminum current collector, dried at 130°C, and rolled so as to have an electrode porosity of 22% to manufacture a positive electrode.

In order to make a flat surface for EPMA cross-sectional analysis, the positive electrode was subjected to Ar-ion milling to obtain a cross-section of a positive electrode sample, and a cross-sectional image of the positive electrode sample was observed using a JEOL JXA-iHP200F apparatus.

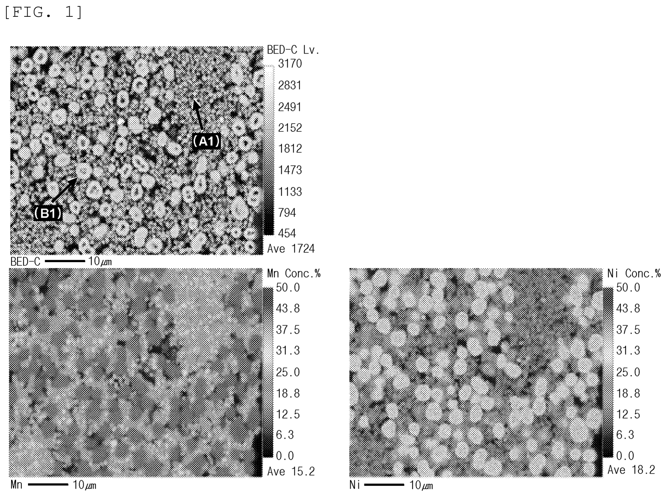

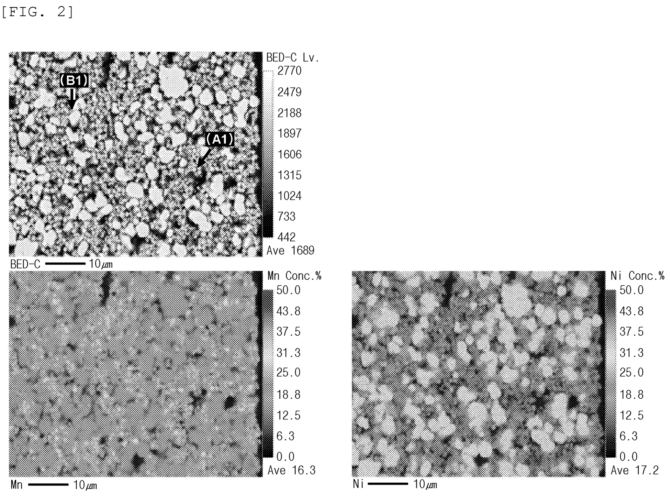

FIGS. 1 and 2 are EPMA data of Examples 1 and 2, respectively. From FIGS. 1 and 2, it may be confirmed that the positive electrode materials of Examples 1 and 2 include the lithium-excess manganese oxide (A1) in the form of a single particle and the lithium nickel oxide (B1) in the form of a secondary particle or a lithium nickel oxide (B2) in the form of a single particle that are well mixed.

**(XRD)**

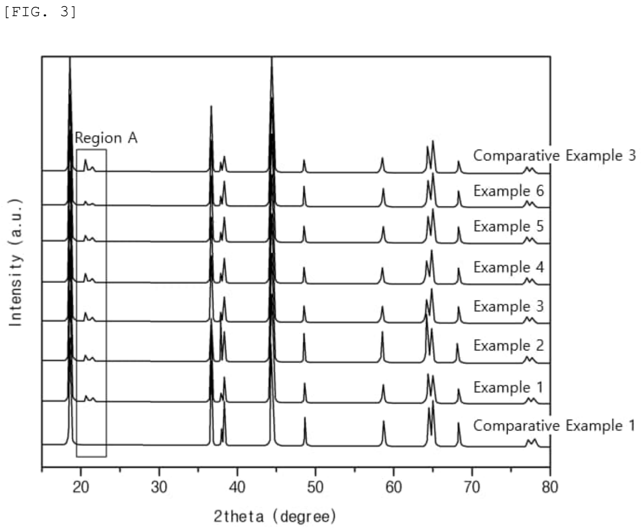

Using XRD (Bruker, D8 endeavor), an XRD spectrum of the positive electrode material or the positive electrode active material of each of Examples and Comparative Examples above was obtained, and this is shown in Fig. 3. Fig. 3 shows XRD data of the positive electrode materials of Examples 1 to 6 and Comparative Examples 1 and 3.

Referring to FIG. 3, it may be confirmed that a super-structure peak (A region), which is a feature of the lithium-excess manganese oxide, is observed in the positive electrode materials of Examples 1 to 6.

**Experimental Example 2: Evaluation of Pellet density**

Using a UTM device (Universal Testing Machine, Instron, Model 5966), a cylindrical mold was used to adjust the zero point for a thickness for a 4 mm diameter cylindrical pellet holder. Then, 40 mg of each of the positive electrode active materials prepared in Examples 1 to 2 and Comparative Examples 2 to 3 was placed into the cylindrical pellet holder, and a force was applied until a force corresponding to 2,000 kgf was reached, and a thickness of the formed pellet was measured. Next, a pellet volume was calculated using the following Equation 1, and a pellet density was calculated using the following Equation 2, and the results are shown in Table 1 below.

Using a compression density meter (Hantech, HPRM-A1), a cylindrical mold was used to adjust the zero point for a thickness for a 22 mm diameter cylindrical pellet holder. Then, 2.5 g of each of the positive electrode active materials prepared in Examples 3 to 6 and Comparative Examples 1 to 4 was placed into the cylindrical pellet holder, and a force was applied until a force corresponding to 2,000 kgf was reached, and the thickness of the formed pellet was measured. Next, the pellet volume was calculated using the following Equation 1, and the pellet density was calculated using the following Equation 2, and the results are shown in Table 1 below.

The pellet volume = π(a radius of the circular pellet holder)2 x the thickness of the pellet     [Equation 1]

The pellet density (g/cm3) = a weight of the positive electrode active material (g) / the pellet volume (cm3)     [Equation 2]

**Experimental Example 3: Evaluation of Battery characteristics**

A positive electrode active material, Super P as a conductive material, and polyvinylidene fluoride (PVDF) as a binder of each of Examples and Comparative Examples above were mixed in a weight ratio of 92.5:3:4.5 in an N-methylpyrrolidone (NMP) solvent to prepare a positive electrode slurry. The prepared positive electrode slurry was applied to one surface of an aluminum current collector, dried at 130°C, and rolled so as to have an electrode porosity of 22% to manufacture a positive electrode.

An electrode assembly was manufactured using a lithium metal electrode as a negative electrode and interposing a porous polyethylene separator between the positive electrode and the negative electrode. This was placed inside a battery case, and an electrolyte solution (additive: 2% of $LiBF_4$, 5% of FEC) in which 1 M of $LiPF_6$ was dissolved in an organic solvent formed by mixing ethylene carbonate (EC) and ethyl methyl carbonate (EMC) in a volume ratio of 3:7 was injected to manufacture a coin-type half-cell.

Using the coin-type half-cell including the positive active material of each of Examples and Comparative Examples above, the cell was charged to 4.65 V in a CC (0.1 C)-CV (Cut-off current: 0.05 C) mode at 45°C, and then discharged to 2.0 V at 0.1 C to perform an activation process (formation). Subsequently, the cell was charged to 4.4 V in the CC (0.1 C)-CV (Cut-off current: 0.05 C) mode at 25°C, and then discharged to 2.5 V at 0.1 C to measure an initial discharge capacity, and the results are shown in Table 1 below.

[Table 1]

| Classification | Pellet density (g/cm$^3$) | Discharge capacity (mAh/g) |
|---|---|---|
| Example 1 | 3.060 | 203.59 |
| Example 2 | 3.181 | 196.06 |
| Example 3 | 2.858 | 189.22 |
| Example 4 | 2.884 | 191.79 |
| Example 5 | 2.916 | 193.96 |
| Example 6 | 2.830 | 195.35 |
| Comparative Example 1 | 2.574 | 199.64 |
| Comparative Example 2 | 3.132 | 188.15 |
| Comparative Example 3 | 1.823 | 209.57 |
| Comparative Example 4 | 2.708 | 187.30 |

Referring to Table 1 above, it may be confirmed that the positive electrode materials of Examples 1 and 2 according to the present invention respectively have remarkably higher pellet densities and more excellent discharge capacities under a high voltage condition than the positive electrode materials of Comparative Examples 1 and 2. In addition, it may be confirmed that the positive electrode materials of Examples 1 and 2 have much higher pellet densities than the positive electrode material of Comparative Example 3.

In addition, it may be confirmed that the positive electrode materials of Examples 3 to 6 according to the present invention have still higher pellet densities than the positive electrode material of Comparative Example 1. In addition, the positive electrode materials of Examples 3 to 6 have remarkably higher pellet densities and more excellent discharge capacities under a high voltage condition than the positive electrode material of Comparative Examples 4.

In conclusion, it may be seen that since the positive electrode material according to the present invention simultaneously includes a large particle mid-Ni lithium nickel oxide and a small particle lithium-excess manganese oxide in the form of a single particle, an energy density and stability are excellent, and as a result, capacity characteristics of a battery including the positive electrode material may be improved. It may be seen that the positive electrode material according to the present invention may be used as a positive electrode material for a high voltage of 4.4 V or higher.

**Claims**

1. A positive electrode material comprising:

    a first positive electrode active material in the form of a single particle; and
    a second positive electrode active material having a greater average particle size ($D_{50}$) than the first positive electrode active material,
    wherein the first positive electrode active material is a lithium-excess manganese oxide simultaneously including a $Li_2MnO_3$ phase and a $LiMO_2$ (where M is an element including at least one selected from Ni, Co and Mn) phase, and
    the second positive electrode active material is a lithium nickel oxide including 50 mol% or more and less than 80 mol% of nickel with respect to the total moles of metals except for lithium.

2. The positive electrode material of claim 1, wherein the first positive electrode active material has an average particle size ($D_{50}$) of 0.1 $\mu$m or more and less than 3.5 $\mu$m.

3. The positive electrode material of claim 1, wherein the second positive electrode active material has an average particle size ($D_{50}$) of 3.5 $\mu$m to 10.0 $\mu$m.

4. The positive electrode material of claim 1, wherein the second positive electrode active material is in the form of a single particle or a secondary particle.

5. The positive electrode material of claim 1, wherein the first positive electrode active material has a composition represented by Formula 1 below,

[Formula 1] $Li_{1+x1}Ni_{a1}Mn_{b1}M^1_{c1}O_{y1}$

where $M^1$ is at least one selected from Co, Mo, W, V, Zr, Al, Nb, Ti, Y, Ta, Sn, and B, $0.05 \leq x1 \leq 0.25$, $0 < a1 \leq 0.5$, $0.5 \leq b1 \leq 0.75$, $0 \leq c1 \leq 0.15$, and $0 \leq y1 \leq 2.0$, and

$$x1+a1+b1+c1=1.0.$$

6. The positive electrode material of claim 1, wherein the second positive electrode active material has a composition represented by Formula 2 below,

[Formula 2] $Li_{1+x2}Ni_{a2}Co_{b2}Mn_{c2}M^2_{d2}O_2$

where $M^2$ is at least one selected from Mo, W, V, Zr, Al, Nb, Ti, Y, Ta, Sn, and B, $0.9 \leq 1+x2 \leq 1.1$, $0.50 \leq a2 < 0.80$, $0 < b2 < 0.50$, $0 < c2 < 0.50$, and $0 \leq d2 \leq 0.1$, and

$$a2+b2+c2+d2=1.0.$$

7. The positive electrode material of claim 1, wherein a weight ratio of the first positive electrode active material and the second positive electrode active material is 1:0.5 to 4.

8. The positive electrode material of claim 1, wherein the positive electrode material has a pellet density of 2.7 $g/cm^2$ to 3.3 $g/cm^2$.

9. A positive electrode comprising the positive electrode material according to any one of claims 1 to 8.

10. A lithium secondary battery comprising the positive electrode according to claim 9.

[FIG. 1]

[FIG. 2]

[FIG. 3]

## INTERNATIONAL SEARCH REPORT

| International application No. |
| --- |
| **PCT/KR2024/010083** |

### A. CLASSIFICATION OF SUBJECT MATTER

**H01M 4/36**(2006.01)i; **H01M 4/505**(2010.01)i; **H01M 4/525**(2010.01)i; **H01M 4/131**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/36(2006.01); H01M 10/052(2010.01); H01M 4/131(2010.01); H01M 4/505(2010.01); H01M 50/107(2021.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단입자(single particle), 양극활물질(cathode active material), 리튬 과잉 망간계 산화물(lithium-excess manganese oxide), 산화물(oxide), 양극(cathode), 이차전지(secondary battery)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2023-091566 A (PRIME PLANET ENERGY & SOLUTIONS INC.) 30 June 2023 (2023-06-30) See claims 1, 5 and 6, and paragraphs [0025], [0026], [0028], [0033] and [0047]. | 1-10 |
| Y | KR 10-2467486 B1 (TOP MATERIAL CO., LTD.) 17 November 2022 (2022-11-17) See claim 1, and paragraphs [0148] and [0149]. | 1-10 |
| A | KR 10-2023-0054267 A (LG ENERGY SOLUTION, LTD.) 24 April 2023 (2023-04-24) See claims 1, 2, 5 and 16. | 1-10 |
| A | KR 10-2022-0110122 A (LG ENERGY SOLUTION, LTD.) 05 August 2022 (2022-08-05) See claims 1, 2, 6, 8, 10 and 12. | 1-10 |
| A | KR 10-2019-0046617 A (LG CHEM, LTD.) 07 May 2019 (2019-05-07) See claims 1, 2, 7, 10 and 11. | 1-10 |

☐ Further documents are listed in the continuation of Box C.    ☑ See patent family annex.

| | |
| --- | --- |
| \*   Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **21 October 2024** | **21 October 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| INTERNATIONAL SEARCH REPORT<br>Information on patent family members | | | International application No.<br>**PCT/KR2024/010083** | | | |
|---|---|---|---|---|---|---|

| Patent document<br>cited in search report | | | Publication date<br>(day/month/year) | Patent family member(s) | | | Publication date<br>(day/month/year) |
|---|---|---|---|---|---|---|---|
| JP | 2023-091566 | A | 30 June 2023 | CN | 116314599 | A | 23 June 2023 |
| | | | | JP | 7495918 | B2 | 05 June 2024 |
| | | | | US | 2023-0197944 | A1 | 22 June 2023 |
| KR | 10-2467486 | B1 | 17 November 2022 | None | | | |
| KR | 10-2023-0054267 | A | 24 April 2023 | CN | 118020194 | A | 10 May 2024 |
| | | | | EP | 4418400 | A1 | 21 August 2024 |
| | | | | JP | 2024-534588 | A | 20 September 2024 |
| | | | | KR | 10-2023-0054244 | A | 24 April 2023 |
| | | | | KR | 10-2673253 | B1 | 12 June 2024 |
| | | | | US | 2023-0117276 | A1 | 20 April 2023 |
| | | | | WO | 2023-063785 | A1 | 20 April 2023 |
| KR | 10-2022-0110122 | A | 05 August 2022 | CN | 115485879 | A | 16 December 2022 |
| | | | | EP | 4131473 | A1 | 08 February 2023 |
| | | | | JP | 2023-528771 | A | 06 July 2023 |
| | | | | US | 2023-0155127 | A1 | 18 May 2023 |
| | | | | WO | 2022-164281 | A1 | 04 August 2022 |
| KR | 10-2019-0046617 | A | 07 May 2019 | CN | 110383541 | A | 25 October 2019 |
| | | | | CN | 110383541 | B | 13 May 2022 |
| | | | | EP | 3576194 | A1 | 04 December 2019 |
| | | | | JP | 2020-510973 | A | 09 April 2020 |
| | | | | JP | 7041802 | B2 | 25 March 2022 |
| | | | | KR | 10-2500085 | B1 | 15 February 2023 |
| | | | | US | 11258054 | B2 | 22 February 2022 |
| | | | | US | 2020-0083522 | A1 | 12 March 2020 |
| | | | | WO | 2019-083157 | A1 | 02 May 2019 |

Form PCT/ISA/210 (patent family annex) (July 2022)

**REFERENCES CITED IN THE DESCRIPTION**

**Patent documents cited in the description**

- KR 1020230091824